# EUROPEAN PATENT APPLICATION

(11) **EP 3 214 350 A2**
(43) Date of publication of application: **06.09.2017**
(21) Application number: 16195684.2
(22) Date of filing: 26.10.2016
(51) Int. Cl.: F16K 11/20

(54) **THERMOSTATIC TAP FOR LIQUID FLUIDS**

(30) Priority: 03.03.2016 ES 201630274 U
(71) Applicant: Caspro, S.A., 08759 Vallirana - Barcelona (ES)
(72) Inventor: TRES CASAS, Daniel, 08759 VALLIRANA (Barcelona) (ES)
(74) Representative: Ungria López, Javier

(57) **Abstract**

The thermostatic tap comprises a housing 1 with three independent chambers (5, 6, 7) that are connected to their respective outlets (5a, 6a, 7a) of liquid fluid. The tap is able to direct the flow of liquid fluid towards one of the three possible outlets of the thermostatic tap: shower mode, cascade shower, or jet mode. It also includes a protective nozzle (23) used to protect at least one of the outlets of liquid fluid in order to prevent a rim that forms part of the housing of the thermostatic tap from deteriorating. The thermostatic tap that is the object of the invention is also able to reduce the noise made by the flow of liquid fluid as it travels inside the housing of the thermostatic tap towards its outlets.

## Description

### OBJECT OF THE INVENTION

The present invention, as expressed in the title of this description, refers to a thermostatic tap for liquid fluids comprising three independent chambers that are connected with their respective outlet of liquid fluids. The tap is able to direct the liquid fluid towards one of the three outlets of the thermostatic tap: shower mode, cascade shower mode, or jet mode. It also includes a protective nozzle used to protect at least one of the outlets of liquid fluids in order to prevent a rim that forms part of the housing of the thermostatic tap from deteriorating. The thermostatic tap that is the object of the invention is also able to reduce the noise made by the flow of liquid fluid as it travels inside the housing of the thermostatic tap towards its outlets.

### TECHNICAL PROBLEM TO ADDRESS AND BACKGROUND OF THE INVENTION

Currently, there are shower taps among the taps for liquid fluids known in the state of the art that comprise a selector cartridge used to choose how the flow of liquid fluid is directed towards a first outlet so that the liquid fluid flows towards a hand shower, or so that the flow of liquid fluid is directed towards a second outlet so that the flow of water exits the device as a jet of water or as a cascade shower.

As a result, sometimes undesired noises are generated when the liquid fluid flows inside the tap, most notably the turbulences that are generated inside the tap, which are very inconvenient since when the water exits the device as a jet of water or cascade shower, sometimes the stream of liquid that flows from the second outlet is not transparent precisely due to the turbulences generated inside the tap.

Additionally, these taps described have another limitation since their selector cartridges can only redirect the flow of water towards two outlets as the ones described above.

The utility model with publication number 1077552 in Spain refers to a thermostatic tap comprising a tandem combination of a thermostatic device for regulating the temperature of the water at the outlet of the tap and a mono-controller device comprising a selector cartridge and the actuation controller. This thermostatic tap only has two outlets for liquid fluids, and undesired noises are caused by turbulences that take place inside the device.

The utility model with publication number 1058918 U in Spain refers to a sprue used to obtain a thermostatic tap with the particular feature that it comprises a single body made of sand, from which the body of a tap with an outlet, inlets and internal ducts can be derived. The body of the tap comprises an internal encasing chamber that keeps the body of the tap at a relatively low temperature in order to prevent the user from getting scalded.

### DESCRIPTION OF THE INVENTION

In order to reach the goals and avoid the drawbacks mentioned in the paragraphs above, the invention proposes a thermostatic tap for liquid fluids comprising a housing with an inner area where hot water and cold water are mixed, and several outlets where the flow of water mixed exits the device. The cold and hot water are mixed by means of a thermostatic device coupled to the housing of the tap.

The thermostatic tap also comprises a distributing device for redirecting the flow of water mixed to one of the outlets.

The distributing device comprises a selector cartridge in combination with a cylindrical body; where the selector cartridge and the section at the front end of the cylindrical body are connected, and they are located inside an intermediate chamber of the housing. The selector cartridge is used to choose the path that the flow of mixed water takes from the intermediate chamber towards one of the outlets of the housing when the cartridge selector is in the open position, which allows the water to travel inside the housing of the thermostatic tap.

The cylindrical body comprises several ducts that end in their respective chambers that are connected to the outlets of the housing; where the mixture of water of the intermediate chamber travels through an inner area of the selector cartridge. Said mixture of water goes through one of the several through holes of the selector cartridge, which are connected to and also face the respective ducts of the cylindrical body.

The cylindrical body of the distributing device comprises:
- A first duct starting from the front base of the cylindrical body and ending in the rear base opposite the front base; where said first duct leads into a first chamber connected to a first outlet of the housing.
- A second duct starting from the front base of the cylindrical body and ending in a lateral face of the cylindrical body; where said second duct leads into a second chamber connected to a second outlet of the housing.
- A third duct starting from the front base of the cylindrical body and ending in a lateral face of the cylindrical body of the distributing device; where said third duct leads into a third chamber connected to a third outlet of the housing.

The front base of the cylindrical body makes contact with the front base of the selector cartridge.

The cylindrical body of the distributing device is fitted in three holes aligned and interposed with sealing gaskets; where said holes are located in a first wall of the housing separating the intermediate chamber from the third chamber; in a second wall of the housing separating the third chamber from the second chamber; and in a third wall of the housing separating the second chamber from the first chamber.

The cylindrical body of the distributing device comprises a central section, a rear end section of a lower diameter than the central part, and a front end section of a bigger diameter than the central part.

Said front end section of the cylindrical body includes the front base, and said front end section is located inside the intermediate chamber of the housing. Two annular areas of the central section of the cylindrical body are fitted inside the holes of the first and second walls of the housing, and the front end section of the cylindrical body is fitted in the third wall of the housing.

The first duct of the cylindrical body comprises a slanted section of a bigger length and a centred axial section of a smaller length that ends in the rear base of said cylindrical body of the distributing device; where said centred axial section has a bigger diameter than the slanted section.

The second duct of the cylindrical body comprises a blind bore that starts in the front base of said cylindrical body, and three radial bores: a central bore and two radial bores on the sides.

The two radial bores on the sides have a bigger diameter than the blind bore, and they also have a bigger diameter than the central radial bore.

The three radial bores converge in a common area of a bottom of the blind bore and the three radial bores lead into the second chamber of the housing of the thermostatic tap.

This particular structure of the three radial bores of the second duct is able to absorb the sound waves and reduce the noise of the thermostatic tap. Said radial bores also absorb the shocks of the flow in order to produce a more transparent cascade shower coming out of the second outlet.

The third duct of the cylindrical body comprises a blind bore and a radial bore of a bigger diameter than said blind bore; where said radial bore leads into the third chamber of the housing of the thermostatic tap.

The second outlet of the housing has a corner rim covered by the protective nozzle made of plastic bearing an elastic structure.

The selector cartridge comprises a rotating valve mechanism and a cylindrical housing where the rotating valve mechanism is located, which is connected to a first outer controller. Said rotating valve mechanism can have four positions: a first position in which the mixture of water travels from the intermediate chamber to the first chamber; a second position where the mixture of water travels from the intermediate chamber to the second chamber; a third position where the mixture of water travels from the intermediate chamber to the third chamber; and a fourth position where the flow of water is blocked.

The cylindrical housing of the selector cartridge includes radial windows that are communicated with the inner area of said cylindrical housing where the rotating valve mechanism is located; where said cylindrical housing includes the front base that is in contact with the front base that forms part of the cylindrical body of the distributing device.

The front base of the cylindrical housing of the selector cartridge comprises three through holes that face the three ducts of the cylindrical body of the distributing device.

The front base of the cylindrical housing of the selector cartridge comprises a lug that is fitted in a blind bore located in the front base of the cylindrical body of the distributing device; where said lug and said blind bore ensure the correct relative position between the cylindrical body and the selector cartridge.

In one of the embodiments of the invention, the housing of the thermostatic tap includes an encasing chamber that is connected to a second cold water inlet junction together with a first hot water inlet junction. It should be noted that the invention is also applicable to other taps that do not comprise the encasing chamber. It should also be noted that the invention is applicable both to taps that comprise a thermostatic device as well as to taps that do not comprise said thermostatic device.

Hereinafter, in order to give a better understanding of the description, the object of the invention has been detailed in a series of drawings that are an integral part of the report and are for illustration purposes and without limitation.

### BRIEF DESCRIPTION OF THE FIGURES

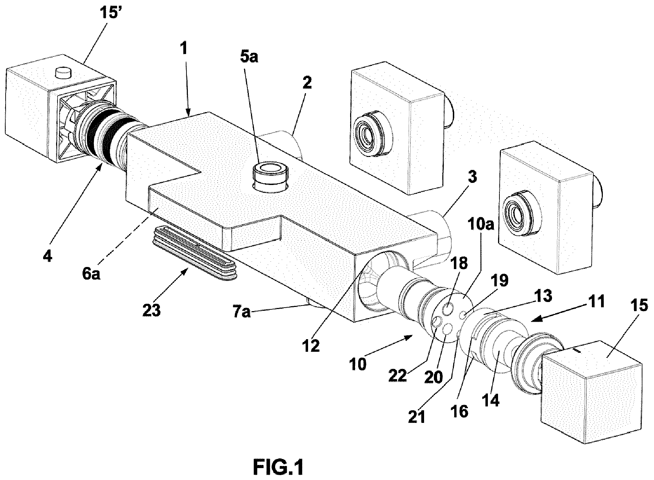

Figure 1.- Shows an exploded perspective view of the thermostatic tap for liquid fluids that is the object of the invention. The tap has three outlets.

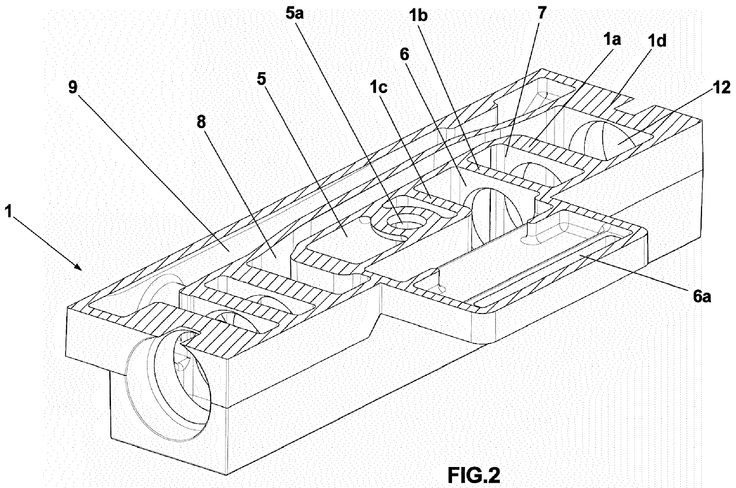

Figure 2.- Shows a cross-sectional view of a housing of the thermostatic tap.

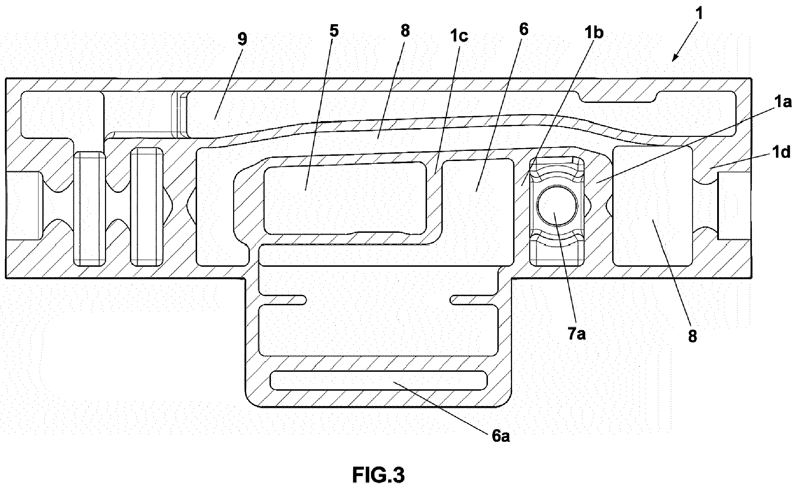

Figure 3.- Shows a plant view of what has been represented in figure 2.

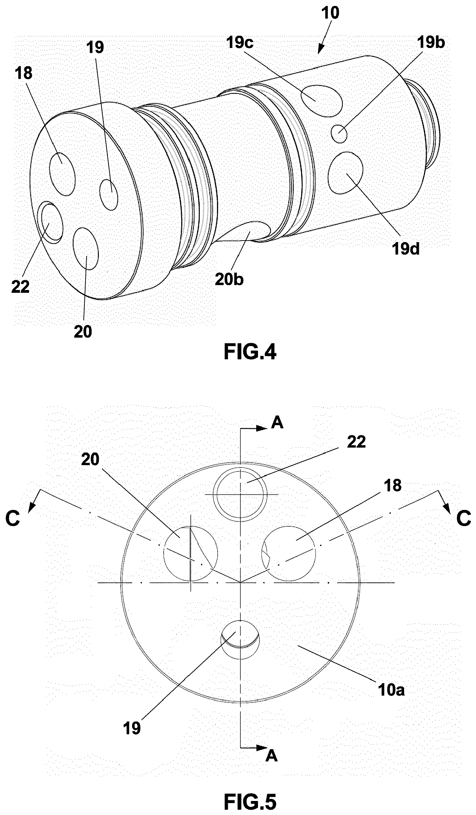

Figure 4.- Shows a perspective view of a cylindrical body that forms part of a distributing device incorporated inside the housing of the thermostatic tap.
Figure 5.- Shows a front view of the cylindrical body.
Figure 6.- Shows a cross-sectional view according to the section A-A of the previous figure.
Figure 7.- Shows a cross-sectional view according to the section B-B of figure 6.
Figure 8.- Shows a cross-sectional view according to the section C-C of figure 5.
Figure 9.- Shows a front view of a selector cartridge connected to the cylindrical body. These two components comprise the distributing device.
Figure 10.- Shows a cross-sectional view of a protective nozzle coupled to an outlet of the thermostatic tap.
Figure 11.- Shows a perspective view of a first outer controller of the tap that is the object of the invention. By turning said first outer controller the flow of liquid fluid is directed towards one of the three outlets of the tap.
Figure 12.- Shows a front view of the first outer controller highlighting three marks placed at angles of 120° that match the three outlets of the tap, and another three intermediate marks placed at angles of 120° that match the three positions of the first outer controller in which the flow of liquid fluid is blocked.

### DESCRIPTION OF A SAMPLE EMBODIMENT

Taking into account the numbering adopted in the figures, the thermostatic tap for liquid fluids comprises a housing 1 with a first hot water inlet junction 2, a second cold water inlet junction 3, a thermostatic device 4 that mixes hot and cold water to achieve the temperature regulated beforehand by said thermostatic device 4, a first chamber 5 connected to a first outlet 5a, a second chamber 6 connected to a second outlet 6a, and a third chamber 7 connected to a third outlet 7a. The liquid fluid is water, though the device may be used with other liquid fluids.

The first chamber 5 ends in the first outlet 5a where the liquid fluid flows as a jet of water, the second chamber 6 ends in the second outlet 6a where the liquid fluid flows as a cascade shower, and the third chamber 7 ends in a third outlet 7a where the liquid fluid flows from a hand shower.

The housing 1 of the thermostatic tap also has an intermediate chamber 8 where the mixture of hot and cold water accumulates after passing through the thermostatic device 4, and an encasing chamber 9 that is connected to the second cold water joint 3; where the water travelling inside the encasing chamber 9 keeps the housing 1 of the thermostatic tap at a relatively low temperature, as it happens in a similar way in the utility model with publication number 1077552 mentioned in the section of the background of the invention.

The thermostatic tap of the invention also comprises a distributing device comprised of a cylindrical body 10 and a selector cartridge 11 in order to be able to direct the mixture of water contained inside the intermediate chamber 8 towards one of the three chambers 5, 6, 7, and to their respective outlets 5a, 6a, 7a.

In order to do so, the cylindrical body 10 is fitted in three holes aligned and interposed with sealing gaskets that are not represented in the drawings. Said holes are located in a first wall 1a of the housing 1 separating the intermediate chamber 8 from the third chamber 7; in a second wall 1b of the housing 1 separating the third chamber 7 from the second chamber 6; and in a third wall 1c of the housing 1 separating the second chamber 6 from the first chamber 5.

The section of the cylindrical body 10 that is fitted in the hole of the third wall 1c of the housing 1 has a smaller diameter than the rest of said cylindrical body 10. The sealing gaskets are fitted inside a series of annular slots 25 placed around the outer surface of said cylindrical body 10.

The selector cartridge 11 is located inside the intermediate chamber 8 and is fitted in a front hole 12 of an end wall 1d of the housing 1.

The selector cartridge 11 comprises a rotating valve mechanism 14 and a cylindrical housing 13 where the rotating valve mechanism 14 is located, which can have four positions: a first position in which the mixture of water travels from the intermediate chamber 8 to the first chamber 5; a second position where the mixture of water travels from the intermediate chamber 8 to the second chamber 6; a third position where the mixture of water travels from the intermediate chamber 8 to the third chamber 7; and a fourth position where the flow of water is blocked.

The rotating valve mechanism 14 is connected to a first outer controller 15 in order to select one of the four positions of said rotating valve mechanism 14. The thermostatic device 4 is regulated by means of a second outer controller 15'.

Additionally, the cylindrical housing 13 includes radial windows 16 that are connected to the inner area of said cylindrical housing 13 where the rotating valve mechanism 14 is located. Said cylindrical housing 13 comprises a front base 17 that is in contact with a front base 10a that forms part of the cylindrical body 10 of the distributing device.

The cylindrical body 10 of the distributing device also comprises a rear base 10b opposite the front base 10a, that also forms part of the cylindrical body 10.

The cylindrical body 10 of the distributing device comprises:
- A first duct 18 that starts from the front base 10a and ends in the rear base 10b connecting the first chamber 5 of the housing 1 of the thermostatic tap.
- A second duct 19 that starts from the front base 10a and ends in a lateral side of the cylindrical body 10 of the distributing device; where said second duct 19 is connected to the second chamber 6 of the housing 1 of the thermostatic tap.
- A third duct 20 that also starts from the front base 10a and ends in the lateral side of the cylindrical body 10 of the distributing device; where said third duct 20 is connected to the third chamber 7 of the housing 1 of the thermostatic tap.

The front base 17 of the cylindrical housing 13 comprises three through holes 18', 19', 20' that face the three ducts 18, 19, 20 that start at the front base 10a of the cylindrical body 10. Said front base 17 of the cylindrical housing 13 comprises a lug 21 that is fitted in a blind bore 22 located in the front base 10a of the cylindrical body 10. This ensures the relative position between the cylindrical body 10 and the selector cartridge 11 of the distributing device.

According to this description, when the rotating valve mechanism 14 of the selector cartridge 11 is placed in one of the three positions that make it possible for the liquid fluid to flow inside the thermostatic tap, said fluid travels from the intermediate chamber 8 to one of the three chambers 5, 6, 7 selected by means of the selector cartridge 11.

Therefore, when for example, in the case when the shower position is selected, water flows through the through hole 20' of the selector cartridge 11 and the third through hole 20 of the cylindrical body 10 until it arrives in the third chamber 7 and its respective outlet 7a of the housing 1 of the thermostatic tap. When this happens, the other two through holes 18', 19' of the selector cartridge 11 are closed.

The three ducts 18, 19 and 20 of the cylindrical body 10 are placed at angles of 120° between them, and the three through holes 18', 19' and 20' are also set at angles of 120° between them. Therefore, in order to select and hold in place one of the three active angular positions corresponding to the outlets of fluid (water jet mode, cascade shower or hand shower), the rotating valve mechanism 14 is turned 120° by means of the first outer controller 15 so that in each of those active angular positions a front bore (not represented in the figures) of the rotating valve mechanism 14 is facing one of the three through holes 18', 19' or 20' located in the front base 17 of the cylindrical housing 13 of the selector cartridge 11.

The rotating valve mechanism 14 can also be set and held in place in other intermediate angular positions in which the flow of water is blocked. In these intermediate angular positions the front bore of the rotating valve mechanism 14 is facing one of the inner surfaces of the front base 17 of the cylindrical housing 13 of the selector cartridge 11 so that the flow of liquid fluid inside the tap is blocked.

It should be noted that the flow of water towards one of the three outlets of the tap can be directed by means of just the first outer controller 15, and said first outer controller 15 can also block the flow of water by placing the rotating valve mechanism 14 in one of the three intermediate angular closing positions described in the paragraph above.

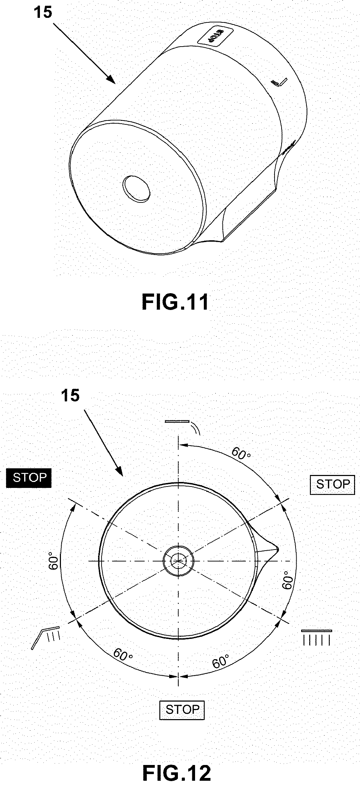

All three active angular positions as well as the three intermediate angular positions of the rotating valve mechanism 14 are held in place by means of a series of physical locks of the first outer controller 15 that secure the 6 angular positions described, as figures 11 and 12 show in greater detail.

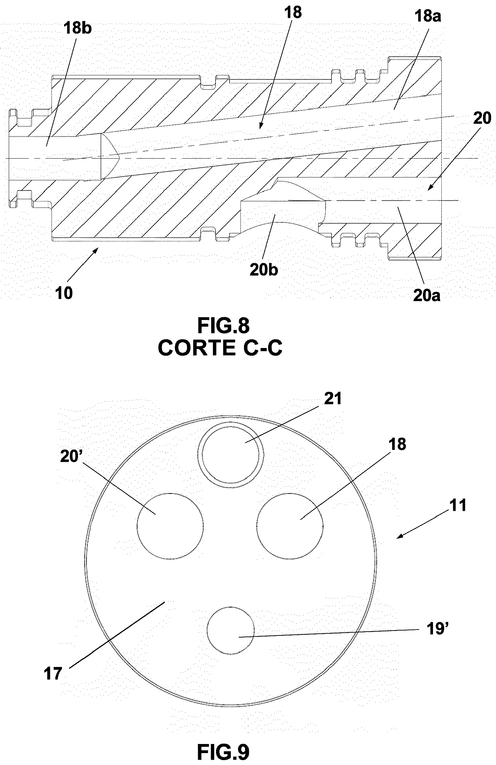

The first duct 18 of the cylindrical body 10 (figure 8) comprises a slanted section 18a of a bigger length and a centred axial section 18b of a smaller length that ends in the rear base 10b of the cylindrical body 10 of the distributing device. The centred axial section 18b has a bigger diameter than the slanted section 18a.

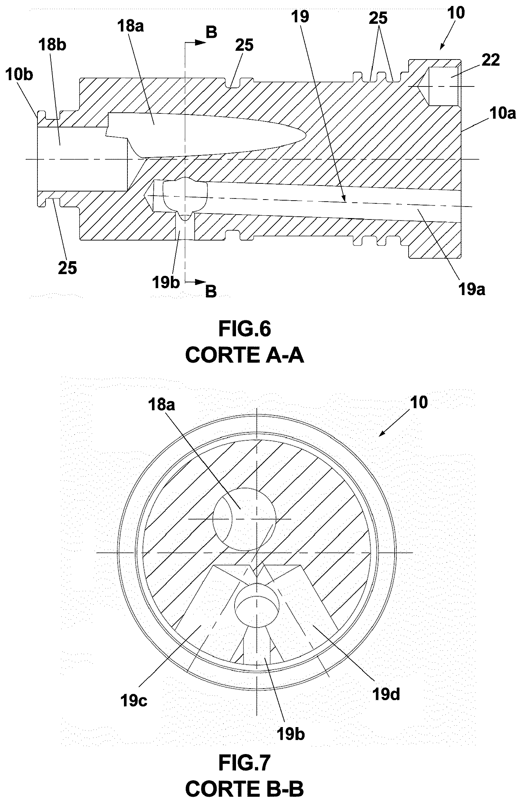

The second duct 19 of the cylindrical body 10 (figure 6) comprises a blind bore 19a that starts from the front base 10a of said cylindrical body 10, and three radial bores: a central bore 19b and two radial bores on the sides 19c, 19d, which have a bigger diameter than the blind bore 19a, and they also have a bigger diameter than the central radial bore 19b. The three radial bores 19b, 19c, 19d converge in a common area at a bottom of the blind bore 19a. Said three radial bores 19b, 19c, 19d lead into the second chamber 6 of the housing 1 of the thermostatic tap.

This particular structure of the three radial bores 19b, 19c, 19d of the second duct 19 are able to absorb the sound waves and reduce the noise of the thermostatic tap. They also absorb the shocks of the flow in order to produce a more transparent cascade shower coming out of the second outlet 6a of the housing 1 of the thermostatic tap.

The third duct 20 of the cylindrical body 10 (figure 6) comprises a blind bore 20a and a radial bore 20b of a bigger diameter than said blind bore 20a; where said radial bore 20b leads into the third chamber 7 of the housing 1 of the thermostatic tap.

The cylindrical body 10 of the distributing device comprises a central section, a rear end section of a lower diameter than the central part, and a front end section of a bigger diameter than the central part; where said front end section includes the front base 10a that is in contact with the front base 17 of the cylindrical housing 13 of the selector cartridge 11.

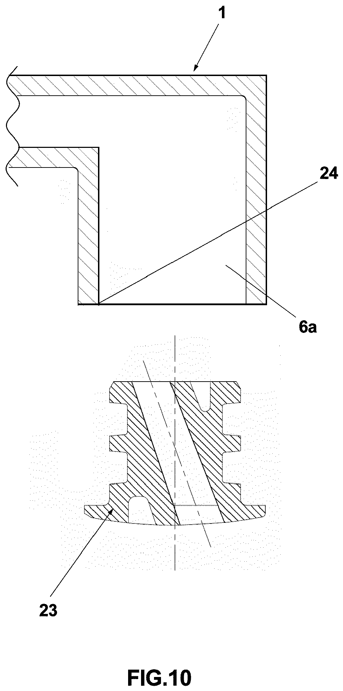

As shown in figure 10, a protective nozzle 23 made of plastic bearing an elastic structure is fitted in the second outlet 6a of the housing 1 of the thermostatic tap. The protective nozzle 23 covers a corner rim 24 of said outlet 6a in order to prevent said corner rim 24 from rusting and deteriorating.

## Claims

1. Thermostatic tap for liquid fluids comprising a housing (1) with an inner area where hot water and cold water are mixed, and several outlets where the flow of mixed liquid fluid exits the device; where the thermostatic tap also comprises a distributing device for redirecting the flow of mixed liquid fluid to one of the outlets; and where the cold and hot liquid fluids are mixed by means of a thermostatic device (4) coupled to the housing (1) of the tap; **characterized in that**:
- the distributing device comprises a selector cartridge (11) in combination with a cylindrical body (10); where the selector cartridge (11) and the section at the front end of the cylindrical body (10) are connected, and they are located inside an intermediate chamber (8) of the housing (1); and where the selector cartridge (11) is used to choose the path that the flow of mixed liquid fluid takes from the intermediate chamber (8) towards one of the outlets of the housing (1) when the cartridge selector (11) is in the open position, which allows the liquid fluid to flow inside the housing (1);
- the cylindrical body (10) comprises several ducts that end in their respective chambers that are connected to the outlets of the housing (1); where the mixture of liquid fluid of the intermediate chamber (8) travels through an inner area of the selector cartridge (11); and where said mixture of liquid fluid goes through one of the several through holes of the selector cartridge (11), which face the respective ducts of the cylindrical body (10).

2. Thermostatic tap for liquid fluids according to claim 1, **characterized in that** the cylindrical body (10) of the distributing device comprises:
- a first duct (18) starting from the front base (10a) of the cylindrical body (11) and ending at the rear base (10b) opposite the front base (10a); where said first duct (18) leads into a first chamber (5) connected to a first outlet (5a) of the housing (1);
- a second duct (19) starting from the front base (10a) of the cylindrical body (10) and ending in a lateral face of the cylindrical body (10); where said second duct (19) leads into a second chamber (6) connected to a second outlet (6) of the housing (1);
- a third duct (20) starting from the front base (10a) of the cylindrical body (10) and ending in a lateral face of the cylindrical body (10) of the distributing device; where said third duct (20) leads into a third chamber (7) connected to a third outlet (7a) of the housing (1);
where the front base (10a) of the cylindrical body (10) makes contact with a front base (17) of the selector cartridge (11).

3. Thermostatic tap for liquid fluids according to claim 2, **characterized in that** the cylindrical body (10) of the distributing device is fitted in three holes aligned and interposed with sealing gaskets; where said holes are located in a first wall (1a) of the housing (1) separating the intermediate chamber (8) from the third chamber (7); in a second wall (1b) of the housing (1) separating the third chamber (7) from the second chamber (6); and in a third wall (1c) of the housing (1) separating the second chamber (6) from the first chamber (5).

4. Thermostatic tap for liquid fluids according to claim 3, **characterized in that**:
- the cylindrical body (10) of the distributing device comprises a central section, a rear end section of a lower diameter than the central part, and a front end section of a bigger diameter than the central part;
- said front end section of the cylindrical body (10) includes the front base (10a), and said front end section is located inside the intermediate chamber (8) of the housing (1);
where two annular areas of the central section of the cylindrical body (10) are fitted inside the holes of the first and second walls (1 a), (1 b) of the housing (1), and the front end section of the cylindrical body (19) is fitted in the third wall (1c) of the housing (1).

5. Thermostatic tap for liquid fluids according to claim 2, **characterized in that** the first duct (18) of the cylindrical body (10) comprises a slanted section (18a) of a bigger length and a centred axial section (18b) of a smaller length that connects to the rear base (10b) of said cylindrical body (10) of the distributing device; where said centred axial section (18b) has a bigger diameter than the slanted section (18a).

6. Thermostatic tap for liquid fluids according to claim 2, **characterized in that**:
- the second duct (19) of the cylindrical body (10) comprises a blind bore (19a) that starts from the front base (10a) of said cylindrical body (10), and three radial bores: a central bore (19b) and two radial bores on the sides (19c), (19d);
- the two radial bores on the sides (19c), (19d) have a bigger diameter than the blind bore (19a), and they also have a bigger diameter than the central radial bore (19a);
- the three radial bores (19b), (19c), (19d) converge in a common area at a bottom of the blind bore (19a) and the three radial bores (19b), (19c), (19d) lead into the second chamber (6) of the housing (1) of the thermostatic tap.

7. Thermostatic tap for liquid fluids according to claim 2, **characterized in that** the third duct (20) of the cylindrical body (10) comprises a blind bore (20a) and a radial bore (20b) of a bigger diameter than said blind bore (20a); where said radial bore (20b) leads into the third chamber (7) of the housing (1) of the thermostatic tap.

8. Thermostatic tap for liquid fluids according to claim 2, **characterized in that** the second outlet (6a) of the housing (1) has a corner rim (24) covered by a protective nozzle (23) made of plastic bearing an elastic structure.

9. Thermostatic tap for liquid fluids according to claim 2, **characterized in that**:
- the selector cartridge (11) comprises a rotating valve mechanism (14) and a cylindrical housing (13) where the rotating valve mechanism (14) is located, which is connected to a first outer controller (15);
where said rotating valve mechanism (14) can have four positions: a first position in which the mixture of liquid fluid travels from the intermediate chamber (8) to the first chamber (5); a second position where the mixture of liquid fluid travels from the intermediate chamber (8) to the second chamber (6); a third position where the mixture of liquid fluid travels from the intermediate chamber (8) to the third chamber (7); and a fourth position in which the flow of water is blocked.

10. Thermostatic tap for liquid fluids according to claim 9, **characterized in that** the cylindrical housing (13) of the selector cartridge (11) includes radial windows (16) that are connected to the inner area of the said cylindrical housing (13) where the rotating valve mechanism (14) is located; where said cylindrical housing (13) includes the front base (17) that is in contact with the front base (10a) that forms part of the cylindrical body (10) of the distributing device.

11. Thermostatic tap for liquid fluids according to claim 10, **characterized in that** the front base (17) of the cylindrical housing (13) of the selector cartridge (11) comprises three through holes (18'), (19'), (20') that face the three ducts (18'), (19'), (20') of the cylindrical body (10) of the distributing device.

12. Thermostatic tap for liquid fluids according to claim 10, **characterized in that** the front base (17) of the cylindrical housing (13) of the selector cartridge (11) comprises a lug (21) that is fitted in a blind bore (22) located in the front base (10a) of the cylindrical body (10) of the distributing device; where said lug and said blind bore (22) ensure the correct relative position between the cylindrical body (10) and the selector cartridge (11).

13. Thermostatic tap for liquid fluids according to claim 1, **characterized in that** the housing (1) includes an encasing chamber (9) that is connected to a second cold water inlet junction (3).
